# EUROPEAN PATENT APPLICATION

(11) **EP 2 930 463 A1**
(43) Date of publication of application: **14.10.2015**
(21) Application number: 15160518.5
(22) Date of filing: 24.03.2015
(51) Int. Cl.: G01B 21/04, G01B 21/24

(54) **SYSTEM FOR MEASURING ORTHOGONALITY OF Y-CROSS BEAM AND X-GUIDES OF A STAGE AND METHOD FOR POSITIONING STAGE HOME USING SAME**

(30) Priority: 10.04.2014 KR 20140042851
(71) Applicant: Soonhan Engineering Corp., Kyungki do 482-806 (KR)
(72) Inventor: Seo, Jong Kyu, 482-806 Sungnam City, Kyungki-Do, (KR)
(74) Representative: Hofmann, Ernst

(57) **Abstract**

Disclosed are a system for measuring the orthogonality of a stage and a method for positioning the stage home using the same. The system for measuring the orthogonality of a stage includes: a first and a second X-axial drive feedback device respectively mounted in a pair of guides respectively arranged in both sides of the stage for measuring and providing a displacement for changing the X-axial position of the stage; a Y-axial drive feedback device mounted in a crossbeam of the stage for measuring and providing a displacement for changing the Y-axial position of the stage; a first and a second X-axial absolute feedback device each mounted at a position in both ends of the crossbeam where the crossbeam intersects with the pair of guides for measuring and providing the position of each of the axes constituting the orthogonality of the stage; and a control unit for controlling the displacement of the stage and detecting a variation of the orthogonality of the stage according to a feedback received from the first and the second X-axial drive feedback device, the Y-axial drive feedback device, and the first and the second X-axial absolute feedback device (Fig. 2).

## Description

### BACKGROUND OF THE INVENTION

### 1. TECHNICAL FIELD

The present invention relates to a system for measuring the orthogonality of a stage, and a method for positioning a stage home using the same, and more particularly to a system for measuring the orthogonality of a stage and detecting a variation of the orthogonality through measuring in real time each of the axes constituting the orthogonality of the stage by means of an incremental feedback device for driving the stage and an absolute feedback device for measuring the position of each of the axes constituting the orthogonality of the stage, and to a method for quickly and accurately positioning the stage home by using the system.

### 2. DESCRIPTION OF RELATED ART

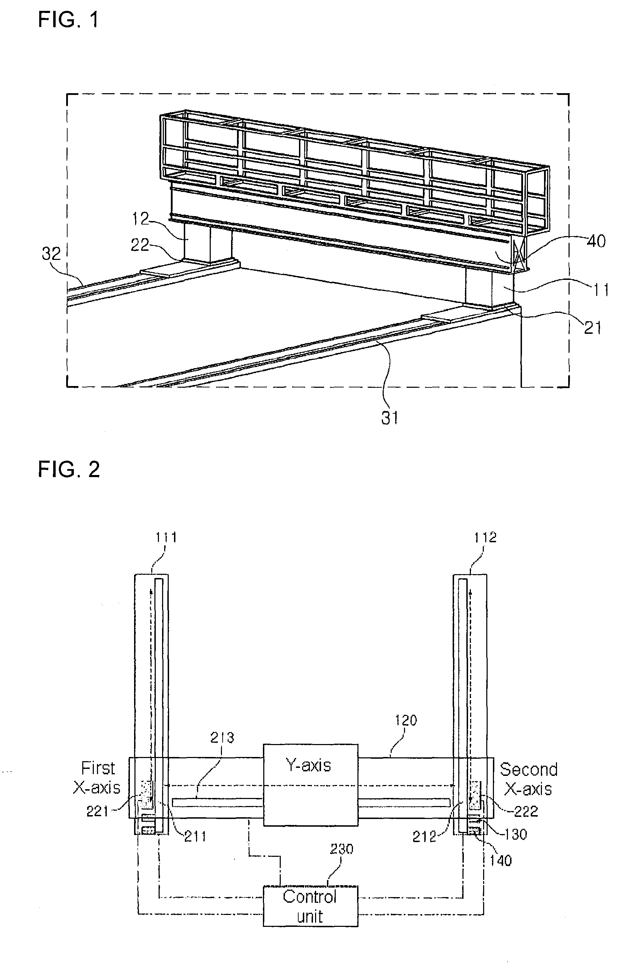

Fig. 1 shows the structure of a stage for illustrating the elements constituting the orthogonality of the stage.

Referring to Fig. 1, a gantry structure type stage includes two linear motors 11, 12 arranged in parallel with each other in the direction of a moving axis, two linear encoders 21, 22 for respectively detecting the positions of the linear motors 11, 12, two guides 31, 32 for respectively supporting and guiding the linear motors 11, 12, and a crossbeam 40 for mechanically connecting the two linear motors 11, 12. Here, the guides 31, 32 positioned on both sides constitute an X-axis, and the crossbeam 40 a Y-axis, where the X-axis and Y-axis should form a right angle with each other.

However, while operating the gantry structure type stage, a problem occurring in the rigidity of the mechanical fastening or an external influence may cause a variation in the orthogonality of the X-axis and Y-axis, which variation serves as an error significantly affecting the result of a production process or apparatus using the gantry structure type stage.

Conventionally the measurement of an error in the orthogonality of the stage has been achieved by calculating the difference between the two values that are obtained by measuring the length of a diagonal by means of two laser interferometers. However, this method requires much time and cost, and may cause installation and measurement errors of the laser interferometer depending on the worker. Moreover, it is difficult to employ this method while operating the stage.

Meanwhile, the accuracy and quickness of positioning the stage home is an important element for precisely controlling the position of a production apparatus including the stage and improving the production speed.

However, when positioning a stage home conventionally, the home sensor or index may cause a lowering of the precision of the positioning. In this case, the speed of moving the stage home must be lowered, thus suffering a drawback of increasing the time for positioning the stage home.

### SUMMARY OF THE INVENTION

Therefore, it is an object of the present invention to provide a technology for measuring in real time the orthogonality of the stage so as to detect a problem during the operation of a production apparatus including the stage, and furthermore for quickly and accurately positioning the stage home.

To this end, an embodiment of the present invention provides a system for measuring the orthogonality of a stage. The system for measuring the orthogonality of a stage includes: a first and a second X-axial drive feedback device respectively mounted in a pair of guides respectively arranged in both sides of the stage for measuring and providing a displacement for changing the X-axial position of the stage; a Y-axial drive feedback device mounted in a crossbeam of the stage for measuring and providing a displacement for changing the Y-axial position of the stage; a first and a second X-axial absolute feedback device each mounted at a position in both ends of the crossbeam where the crossbeam intersects with the pair of guides for measuring and providing the position of each of the axes constituting the orthogonality of the stage; and a control unit for controlling the displacement of the stage and detecting a variation of the orthogonality of the stage according to a feedback received from the first and the second X-axial drive feedback device, the Y-axial drive feedback device, and the first and the second X-axial absolute feedback device.

Meanwhile, another embodiment of the present invention provides a method for positioning a stage home by means of a system for measuring the orthogonality of the stage. The method for positioning the stage home includes the steps of: moving the stage up to a limit sensor provided at the ends of guides on both sides of the stage by using the incremental feedback device; and moving the stage up to a position provided with a home sensor of the stage by using the absolute feedback device.

In addition, the above-described means for achieving the object does not detail all the characteristics of the present invention. The various characteristics of the present invention and the advantageous effects thereof may be understood more in detail with reference to the following specific embodiments.

Provided are a system for measuring the orthogonality of a stage and detecting a variation of the orthogonality through measuring in real time each of the axes constituting the orthogonality of the stage by means of an incremental feedback device for driving the stage and an absolute feedback device for measuring the position of each of the axes constituting the orthogonality of the stage, and a method for positioning the stage home by using the system.

### BRIEF DESCRIPTION OF THE DRAWINGS

- Fig. 1: shows the structure of a stage for illustrating the elements constituting the orthogonality of the stage;
- Figs. 2 and 3: show the structure of a system for measuring the orthogonality of a stage according to an embodiment of the present invention;
- Fig. 4: illustrates a conventional method for positioning a stage home by means of an incremental feedback device; and
- Fig. 5: illustrates a method for positioning a stage home by means of an incremental feedback device and an absolute feedback device according to another embodiment of the present invention.

### DETAILED DESCRIPTION OF THE INVENTION

Hereinafter will be more specifically described preferred embodiments of the present invention with reference to the attached drawings, so that a person skilled in the art may readily carry out the present invention. However, when it is judged that a detailed description of the conventional functions and structures associated with the present invention might make the gist of the present invention undesirably ambiguous, such a detailed description is omitted. In addition, the same reference numerals are used for the parts with a similar function throughout the attached drawings.

In addition, the expression that a part is 'connected' to another part in the specification means both 'direct connection' between them and 'indirect connection' via another element between them. Also, the expression 'including a certain constituent element' means the possibility of further including other elements without any specific description to the contrary.

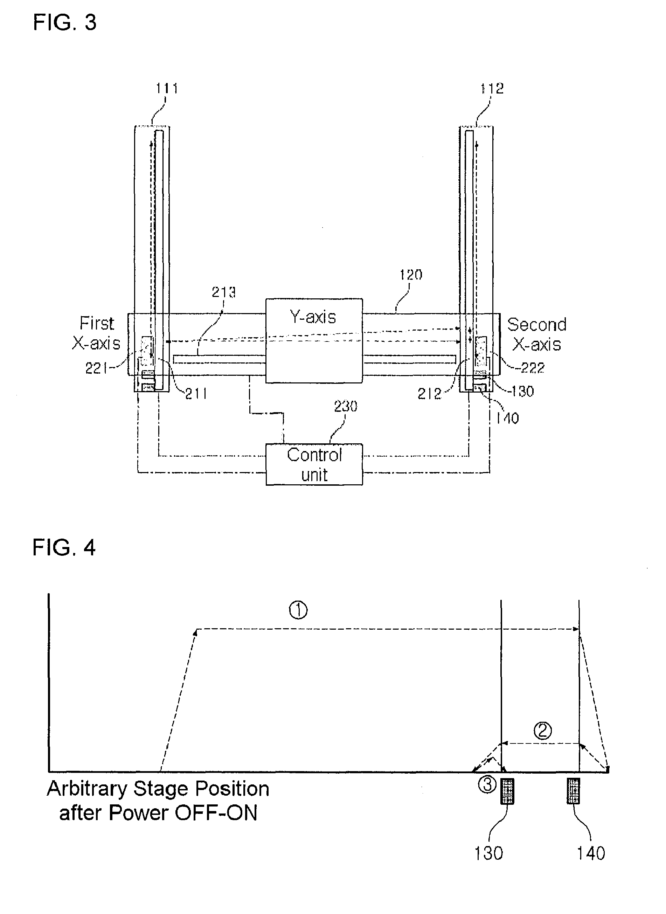

Figs. 2 and 3 show the structure of a system for measuring the orthogonality of a stage according to an embodiment of the present invention, wherein Fig. 2 shows the initially assembled state of the stage, and Fig. 3 the state of the orthogonality varied during operation of the stage.

Referring to Fig. 2, a system 200 for measuring the orthogonality of a stage according to an embodiment of the present invention includes a first and a second X-axial drive feedback device 211, 212, a Y-axial drive feedback device 213, a first and a second X-axial absolute feedback device 221, 222, and a control unit 230.

The first and the second X-axial drive feedback device 211, 212 are mounted in respective guides 111, 112 arranged on both sides of the stage to change the X-axial position of the stage, and the Y-axial feedback device 213 is mounted in a crossbeam 120 to change the Y-axial position of the stage, which feedback devices may consist of an incremental encoder.

The incremental encoder constituting the first and the second X-axial drive feedback device 211, 212 and the Y-axial feedback device 213 can only provide a positional variation, namely, the amount of displacement from the initial position, but not the absolute value of the present position. Hence, if the control unit 230 or the amplifier (not shown) receiving a feedback from the incremental encoder has been turned off, the value of the present position cannot be obtained even if it is turned on again.

The first and the second X-axial absolute feedback device 221, 222 are respectively mounted at the positions in both ends of the crossbeam 120 where the crossbeam 120 intersects with the guides 111, 112, to measure the position of each of the axes constituting the orthogonality of the stage, which feedback devices can consist of an absolute encoder.

The absolute encoder constituting the first and the second X-axial feedback device 221, 222 can provide the absolute value of the present position, and therefore, even if the control unit 230 or the amplifier (not shown) receiving a feedback from the absolute encoder is turned on again after having been turned off, the absolute value of the present position can be obtained.

The control unit 230 controls the displacement of the stage and detects a variation of the orthogonality of the stage according to a feedback received from the first and the second X-axial drive feedback device 211, 212, the Y-axial drive feedback device 213, and the first and the second X-axial absolute feedback device 221, 222, which control unit consists of a microprocessor for calculating and controlling.

The control unit 230 can provide the absolute value of the present position of the stage even if the power is turned off during operation of the stage, because it receives a feedback from both incremental encoder and absolute encoder. Hence, the control unit 230 can calculate in real time a variation of the orthogonality of the stage based on the orthogonality measured initially at the time of assembling the stage as shown in Fig. 2 and the varied orthogonality measured during operation of the stage as shown in Fig. 3.

In addition, the control unit 230 can use a variation of the orthogonality for diagnosing, monitoring, and analyzing problems of the system, or provide it to an external instrument to this end.

Fig. 4 illustrates a conventional method for positioning a stage home by means of an incremental feedback device.

Referring to Fig. 4, if positioning a stage home only by means of an incremental feedback device according to prior art, ① the stage firstly is moved up to a limit sensor 140 installed in one end of the guide 111, 112 at both sides of the stage, ② and then in the opposite direction in order to find a home sensor 130. In this case it should be moved with a low speed for a precise positioning, and should be moved to an additional distance after detecting the home sensor in order to reduce the speed. ③ After stopping with the speed reduction, it should be moved again up to the detected home sensor, and therefore it takes a long time along with a degradation of precision.

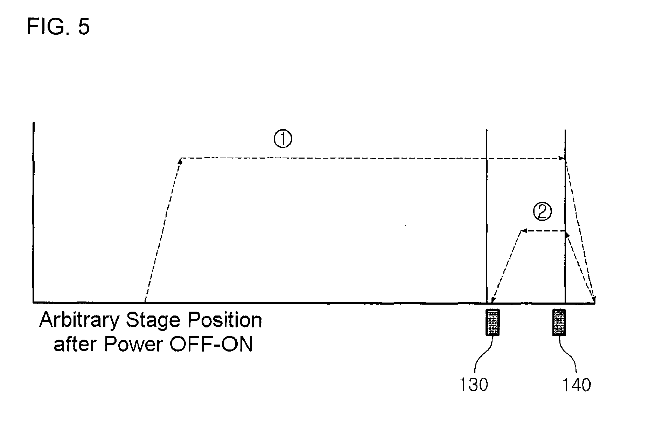

Fig. 5 illustrates a method for positioning a stage home by means of an incremental feedback device and an absolute feedback device according to another embodiment of the present invention.

Referring to Fig. 5, if positioning a stage home by means of a system for measuring the orthogonality of the stage according to an embodiment of the present invention, ① the stage firstly is moved up to the limit sensor 140 by means of the first and the second X-axial drive feedback device 211, 212, ② and then quickly to the home position by means of the first and the second X-axial absolute feedback device 221, 222. Thus, the precision and speed of positioning the stage home is improved, thereby enhancing the precision and productivity of the system.

The embodiments of the present invention precisely detect in real time a variation of the orthogonality of the stage during operation of the stage so as to discover in advance an error of the stage and to provide data for correcting the error.

In addition, the absolute value of the home position of the stage can be measured so as to improve the speed, precision and stability of positioning the stage home.

Also, both incremental feedback devices and absolute feedback devices are employed so as to use the absolute feedback device of higher cost and lower precision least, thereby decreasing the production cost and improving the precision of controlling.

The present invention should not be limited by the above-described embodiments and the attached drawings. It is obvious to a person skilled in the art that the constituents of the present invention may be substituted, modified and altered without departing from the technical concept of the present invention.

## Claims

1. System for measuring the orthogonality of a stage including:
a first and a second X-axial drive feedback device (211, 212) respectively mounted in a pair of guides (111, 112) respectively arranged in both sides of the stage for measuring and providing a displacement for changing the X-axial position of the stage;
a Y-axial drive feedback (213) device mounted in a crossbeam (120) of the stage for measuring and providing a displacement for changing the Y-axial position of the stage;
a first and a second X-axial absolute feedback (221, 222) device each mounted at a position in both ends of the crossbeam (120) where the crossbeam (120) intersects with the pair of guides (111, 112) for measuring and providing the position of each of the axes constituting the orthogonality of the stage; and
a control unit (230) for controlling the displacement of the stage and detecting a variation of the orthogonality of the stage according to a feedback received from the first and the second X-axial drive feedback device (211, 212), the Y-axial drive feedback device (213), and the first and the second X-axial absolute feedback device (221, 222).

2. System for measuring the orthogonality of a stage according to Claim 1, wherein the first and the second X-axial drive feedback device (211, 212) comprise an incremental encoder.

3. System for measuring the orthogonality of a stage according to Claim 1, wherein the first and the second X-axial absolute value feedback device (221, 222) comprise an absolute encoder.

4. System for measuring the orthogonality of a stage according to Claim 1, wherein said control unit (230) detects a variation of the orthogonality of said stage in real time based on the orthogonality measured at the time of initially assembling said stage and the changed orthogonality measured during the operation of said stage.

5. Method for positioning a stage home by means of a system according to claim 1 including an incremental feedback device and an absolute feedback device for measuring the orthogonality of said stage, including the steps of:
moving said stage up to a limit sensor (140) provided at the ends of guides (111, 112) on both sides of said stage by using said incremental feedback device; and
moving said stage up to a position provided with a home sensor (130) of said stage by using said absolute feedback device.
